# EUROPEAN PATENT APPLICATION

(11) **EP 4 329 008 A1**
(43) Date of publication of application: **28.02.2024**
(21) Application number: 22820235.4
(22) Date of filing: 08.06.2022
(51) Int. Cl.: H01M 4/38, H01M 4/36, H01M 10/052, H01M 10/0562

(54) **ALL-SOLID-STATE ELECTROCHEMICAL ELEMENT AND SULFUR-CARBON COMPLEX**

(30) Priority: 09.06.2021 JP 2021096961
(71) Applicant: GS Yuasa International Ltd., Kisshoin, Minami-ku, Kyoto-shi, Kyoto 601-8520 (JP)
(72) Inventor: HARADA Ryo, Kyoto-shi, Kyoto 601-8520 (JP)
(74) Representative: Isarpatent
(86) International application number: PCT/JP2022/023033
(87) International publication number: WO 2022/260056

(57) **Abstract**

An all-solid-state electrochemical device according to one aspect of the present invention includes: a positive active material layer; an isolation layer; and a negative active material layer, in which the positive active material layer includes a sulfur-carbon composite, the sulfur-carbon composite contains sulfur and porous carbon, and the carbon has an average pore size of 0.5 nm or more and 3.0 nm or less and an average particle size of 0.1 µηι or more and 30.0 µm or less.

## Description

### TECHNICAL FIELD

The present invention relates to an all-solid-state electrochemical device and a sulfur-carbon composite.

### BACKGROUND ART

Lithium ion secondary batteries have been, because their high energy densities, heavily used for electronic devices such as personal computers and communication terminals, automobiles, and the like. The lithium ion secondary batteries each include a pair of electrodes electrically isolated by a separator, and a nonaqueous electrolyte interposed between the electrodes, and is configured to allow lithium ions to be transferred between the two electrodes for charge-discharge. In addition, capacitors such as lithium ion capacitors have been also widely used as energy storage devices other than the lithium ion secondary batteries.

In recent years, for the increased capacity of energy storage devices, positive active materials that are high in energy density have been required. Sulfur is known as such a positive active material. As an energy storage device using sulfur for a positive active material, for example, in Patent Document 1, as a mesoporous carbon composite material used for an electrode of a nonaqueous electrolyte type secondary battery, a sulfur-carbon composite material containing sulfur in an amount of 5% or more of the total weight in mesopores of mesoporous carbon having pores with an average diameter of 1 to 40 nm has been proposed (see Patent Document 1).

### PRIOR ART DOCUMENT

### PATENT DOCUMENT

Patent Document 1: JP-A1-2016-075916

### SUMMARY OF THE INVENTION

### PROBLEMS TO BE SOLVED BY THE INVENTION

However, the present inventor has found that when sulfur is used for the positive active material of the all-solid-state electrochemical device, polarization is large.

The present invention has been made based on the above circumstances, and an object of the present invention is to provide an all-solid-state electrochemical device capable of reducing polarization generated when sulfur is used as a positive active material, and to provide a sulfur-carbon composite capable of reducing polarization when used for the positive active material of the all-solid-state electrochemical device.

### MEANS FOR SOLVING THE PROBLEMS

An all-solid-state electrochemical device according to one aspect of the present invention includes: a positive active material layer; an isolation layer; and a negative active material layer, in which the positive active material layer includes a sulfur-carbon composite, the sulfur-carbon composite contains sulfur and porous carbon, and the carbon has an average pore size of 0.5 nm or more and 3.0 nm or less and an average particle size of 0.1 µm or more and 30.0 µm or less.

A sulfur-carbon composite according to another aspect of the present invention includes sulfur and porous carbon, in which the carbon has an average pore size of 0.5 nm or more and 3.0 nm or less and an average particle size of 0.1 µm or more and 30.0 µm or less.

### ADVANTAGES OF THE INVENTION

The all-solid-state electrochemical device according to one aspect of the present invention can reduce polarization generated when sulfur is used as the positive active material.

The sulfur-carbon composite according to another aspect of the present invention can reduce polarization when used in the positive active material of the all-solid-state electrochemical device.

### BRIEF DESCRIPTION OF THE DRAWINGS

Fig. 1 is a schematic cross-sectional view of an all-solid-state battery as an embodiment of an all-solid-state electrochemical device of the present invention.
Fig. 2 is a schematic diagram illustrating an embodiment of an energy storage apparatus configured by assembling a plurality of all-solid-state electrochemical devices.
Fig. 3 is a diagram illustrating charge-discharge curves of Examples and Comparative Examples.
Fig. 4 is a diagram illustrating charge curves of Examples and Comparative Examples.
Fig. 5 is a diagram illustrating discharge curves of Examples and Comparative Examples.
Fig. 6 is a diagram illustrating the charge-discharge curves of Examples and Comparative Examples.
Fig. 7 is a diagram illustrating the charge-discharge curve of Reference Examples.

### MODE FOR CARRYING OUT THE INVENTION

As will be appreciated from the following description and examples, matters disclosed herein include:
[1]: An all-solid-state electrochemical device including: a positive active material layer; an isolation layer; and a negative active material layer, in which the positive active material layer includes a sulfur-carbon composite, the sulfur-carbon composite contains sulfur and porous carbon, the carbon has an average pore size of 0.5 nm or more and 3.0 nm or less, and an average particle size of 0.1 µm or more and 30.0 µm or less.
[2]: The all-solid-state electrochemical device according to [1], in which the positive active material layer contains a sulfide solid electrolyte.
[3]: A sulfur-carbon composite including sulfur and porous carbon, in which the carbon has an average pore size of 0.5 nm or more and 3.0 nm or less and an average particle size of 0.1 µηι or more and 30.0 µm or less.

First, outlines of an all-solid-state electrochemical device and a sulfur-carbon composite disclosed in the present specification will be described.

An all-solid-state electrochemical device according to one aspect of the present invention includes: a positive active material layer; an isolation layer; and a negative active material layer, in which the positive active material layer includes a sulfur-carbon composite, the sulfur-carbon composite contains sulfur and porous carbon, and the carbon has an average pore size of 0.5 nm or more and 3.0 nm or less and an average particle size of 0.1 µm or more and 30.0 µm or less.

The all-solid-state electrochemical device can reduce polarization generated when sulfur is used as the positive active material. Although the reason for this is not clear, the following reason is presumed. When the average pore size of carbon in the sulfur-carbon composite is 0.5 nm or more and 3.0 nm or less, an electron conduction path between sulfur and carbon is well maintained. As a result, in the all-solid-state electrochemical device, polarization generated when sulfur is used for the positive electrode can be reduced. In addition, when the average particle size of carbon is 0.1 µηι or more and 30.0 µm or less, voids in the positive active material layer of the all-solid-state electrochemical device can be reduced, and an ion and electron conduction path in the positive active material layer is easily constructed. Therefore, it is presumed that the all-solid-state electrochemical device can reduce polarization generated when sulfur is used as the positive active material.

In the all-solid-state electrochemical device, the positive active material layer preferably contains a sulfide solid electrolyte. Accordingly, performance of the all-solid-state electrochemical device can be enhanced.

A sulfur-carbon composite according to another aspect of the present invention includes sulfur and porous carbon, in which the carbon has an average pore size of 0.5 nm or more and 3.0 nm or less and an average particle size of 0.1 µηι or more and 30.0 µm or less.

The sulfur-carbon composite contains sulfur and porous carbon, and when the average pore size and the average particle size of the carbon are in a specific range, polarization can be reduced when the sulfur-carbon composite is used for a positive active material of an all-solid-state electrochemical device. Although the reason for this is not clear, the same reason can be considered as the reason why the all-solid-state electrochemical device can reduce polarization generated when sulfur is used as the positive active material.

A configuration of an all-solid-state electrochemical device, a configuration of an energy storage apparatus, and a method of manufacturing the all-solid-state electrochemical device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <All-solid-state electrochemical device>

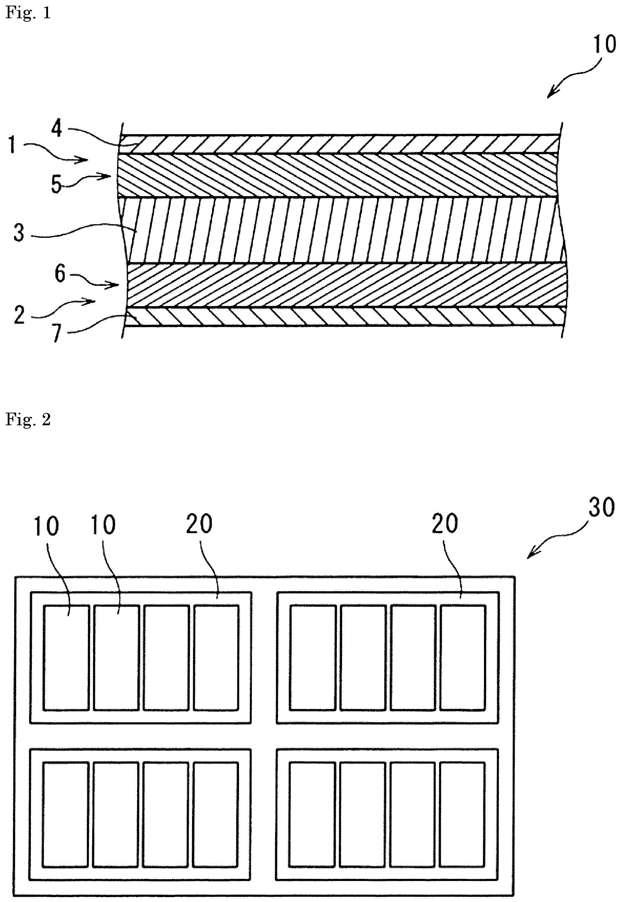

Hereinafter, as an embodiment of the all-solid-state electrochemical device according to the present invention, an all-solid-state battery will be described as a specific example. An all-solid-state battery 10 illustrated in Fig. 1 is a secondary battery in which a positive electrode 1 and a negative electrode 2 are arranged with an isolation layer 3 interposed therebetween. The positive electrode 1 includes a positive substrate 4 and a positive active material layer 5, and the positive substrate 4 is an outermost layer of the positive electrode 1. The positive active material layer 5 contains the sulfur-carbon composite. The negative electrode 2 includes a negative substrate 7 and a negative active material layer 6, and the negative substrate 7 is an outermost layer of the negative electrode 2. In the all-solid-state battery 10 illustrated in Fig. 1, the negative active material layer 6, the isolation layer 3, the positive active material layer 5, and the positive substrate 4 are stacked in this order on the negative substrate 7.

### [Positive electrode]

The positive electrode 1 includes the positive substrate 4 and the positive active material layer 5 stacked on a surface of the positive substrate 4 directly or with an intermediate layer interposed therebetween.

### (Positive substrate)

The positive substrate 4 has conductivity. Whether the positive substrate has "conductivity" or not is determined with the volume resistivity of 10⁷ Ω ·cm measured in accordance with JIS H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate 4 is preferably 3 µm or more and 50 µm or less, more preferably 5 µηι or more and 40 µm or less, still more preferably 8 µm or more and 30 µm or less, particularly preferably 10 µηι or more and 25 µm or less. By setting the average thickness of the positive substrate 4 to the above range, it is possible to increase the energy density per volume of the all-solid-state battery while increasing the strength of the positive substrate 4.

### (Intermediate layer)

The intermediate layer is a layer disposed between the positive substrate 4 and the positive active material layer 5. The intermediate layer includes a conductive agent such as carbon particles to reduce contact resistance between the positive substrate and the positive active material layer. The configuration of the intermediate layer is not particularly limited, and includes, for example, a binder and a conductive agent.

### (Positive active material layer)

The positive active material layer 5 includes a positive active material. The positive active material layer 5 usually further contains a solid electrolyte. The positive active material layer 5 may contain a mixture or composite containing a positive active material and a solid electrolyte. The positive active material layer 5 contains optional components such as a conductive agent, a binder, a thickener, a filler, or the like as necessary.

The positive active material contains the sulfur-carbon composite. The sulfur-carbon composite contains sulfur and porous carbon. The sulfur-carbon composite can reduce polarization when used in the positive active material of the all-solid-state electrochemical device. The sulfur-carbon composite means a composite in which pores of porous carbon are filled with at least a part of sulfur.

The lower limit of the sulfur content in the sulfur-carbon composite (the ratio of the mass of sulfur atoms to the mass of the sulfur-carbon composite) is preferably 50% by mass, and more preferably 55% by mass. On the other hand, the upper limit of this content is preferably 90% by mass, and more preferably 80% by mass. By setting the sulfur content in the sulfur-carbon composite to be equal to or more than the lower limit and equal to or less than the upper limit, the energy density as the all-solid-state electrochemical device can be increased, and good positive electrode characteristics can be exhibited.

The average pore size of carbon in the sulfur-carbon composite is 0.5 nm or more and 3.0 nm or less, preferably 0.7 nm or more and 2.7 nm or less, more preferably 0.8 nm or more and 2.6 nm or less, still more preferably 0.9 nm or more and 2.5 nm or less, and even more preferably 1.0 nm or more and 2.4 nm or less. By setting the average pore size to be equal to or less than the upper limit mentioned above, the electron conduction path between sulfur and carbon is well maintained, so that polarization in the all-solid-state electrochemical device can be reduced. On the other hand, by setting the average pore size to be equal to or more than the lower limit mentioned above, a surface area suitable for occlusion and release of a charge carrier is secured, and charge-discharge characteristics can be enhanced.

The average pore size of carbon in the sulfur-carbon composite is a value measured by the following method. First, 1.00 g of a carbon powder to be a sample to be measured is placed in a sample tube for measurement, and vacuum-dried at 120°C for 6 hours and at 180 °C for 6 hours to sufficiently remove moisture in the measurement sample. Next, by a nitrogen gas adsorption method using liquid nitrogen, isotherms on the adsorption side and the extraction side are measured in a relative pressure P/P0 (P0 = about 770 mmHg) range of 0 to 1, whereby the average pore size of the carbon is calculated. A measuring device and control/analysis software are not particularly limited as long as they are a device and control/analysis software capable of the above measurement, and for example, "autosorb iQ" manufactured by Quantachrome Instruments can be used as the measuring device, and "ASiQwin" can be used as the control/analysis software.

Here, the carbon powder to be the sample to be measured is provided by the following method when the measurement sample is collected from the positive composite taken out by disassembling the all-solid-state electrochemical device. Before disassembling the all-solid-state electrochemical device, the all-solid-state electrochemical device is subjected to constant current discharge at a current value of 0.05 C to a lower limit voltage in normal use under an environment of 25°C. The all-solid-state electrochemical device is disassembled, and the positive composite is taken out. The sulfur-carbon composite is collected from the taken out positive composite. Next, the collected sulfur-carbon composite is heat-treated to 500°C in an argon flow to vaporize sulfur. Then, a residue remaining as carbon is collected and subjected to measurement.

The average particle size of carbon in the sulfur-carbon composite is 0.1 µm or more and 30.0 µm or less, preferably 1.0 µm or more and 25.0 µm or less, more preferably 3.0 µm or more and 20.0 µm or less, still more preferably 4.0 µm or more and 17.0 µm or less, and even more preferably 4.5 µm or more and 15.4 µm or less. When the average particle size of carbon is equal to or less than the upper limit mentioned above, voids in the positive active material layer can be reduced, and the ion and electron conduction path in the positive active material layer is easily constructed. In addition, since the number of pores per surface area of the carbon increases and a current distribution becomes more uniform, polarization in the all-solid-state electrochemical device can be reduced. When the average particle size of carbon is equal to or more than the lower limit mentioned above, the sulfur-carbon composite is easy to handle.

The average particle size of carbon in the sulfur-carbon composite means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013). A measuring device and measurement control software are not particularly limited as long as they are a device and control software capable of the above measurement, and for example, "Microtrac (model number: MT 3000)" manufactured by Nikkiso Co., Ltd. can be used as the measuring device, and "Microtrac DHS for Win 98 (MT 3000)" can be used as the measurement control software.

The porous carbon in the sulfur-carbon composite preferably has a specific surface area of 2000 m²/g or more and 3000 m²/g or less. When the specific surface area of the porous carbon is within the above range, sulfur and the porous carbon come into good contact with each other, and conductivity is enhanced, so that a sulfur utilization factor in the all-solid-state battery can be improved.

The content of the sulfur-carbon composite in the positive active material layer 5 (the ratio of the mass of the sulfur-carbon composite to the mass of the positive active material layer) is preferably 40% by mass or more and 77% by mass or less, and more preferably 48% by mass or more and 72% by mass or less. By setting the content of the sulfur-carbon composite to the above range, it is possible to achieve both a large electric capacity and good conductivity, and increase the energy density as the all-solid-state battery.

The positive active material may contain a positive active material other than sulfur-carbon composite. Examples of positive active materials other than the sulfur-carbon composite include polymers, metals, and oxides. However, the lower limit of the content of the sulfur-carbon composite in the entire positive active material is preferably 80% by mass, more preferably 85% by mass, and still more preferably 88% by mass. The upper limit of the content of the sulfur-carbon composite in the entire positive active material may be 100% by mass, 99% by mass, or 98% by mass. That is, the content of the sulfur-carbon composite in the entire positive active material may be 80% by mass or more and 100% by mass or less, 85% by mass or more and 99% by mass or less, or 88% by mass or more and 98% by mass or less.

The positive active material layer 5 usually contains a solid electrolyte. Examples of the solid electrolyte include sulfide solid electrolytes, oxide solid electrolytes, fluoride solid electrolytes, nitride solid electrolytes, dry polymer electrolytes, and gel polymer electrolytes. Among them, a sulfide solid electrolyte is preferable. In addition, a plurality of different kinds of solid electrolytes may be contained in the positive active material layer 5.

The sulfide solid electrolyte may be any material that contains sulfur and exhibits ion conductivity to carrier ions. The sulfide solid electrolyte typically contains a lithium element and a sulfur element and has lithium ion conductivity. The sulfide solid electrolyte preferably contains a lithium element, a sulfur element, and a phosphorus element as main components, and more preferably contains a lithium element, a sulfur element, a phosphorus element, and a halogen element as main components. The sulfide solid electrolyte may further contain a typical nonmetal element such as B, N, O, C, or Si, a typical metal element such as Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Nb, or W. The sulfide solid electrolyte may be any of a crystalline material, glass ceramics, and glass. Specific examples of the sulfide solid electrolyte include Li₂S-P₂S₅ system, Li₂S-P₂S₅-LiI system, Li₂S-P₂S₅-LiCl system, Li₂S-P₂S₅-LiBr system, Li₂S-P₂S₅-Li₂O system, Li₂S-P₂S₅-Li₂O-LiI system, Li₂S-P₂S₅-Li₃N system, Li₂S-SiS₂ system, Li₂S-SiS₂-LiI system, Li₂S-SiS₂-LiBr system, Li₂S-SiS₂-LiCl system, Li₂S-SiS₂-B₂S₃-LiI system, Li₂S-SiS₂-P₂S₅-LiI system, Li₂S-B₂S₃ system, Li₂S-P₂S₅-ZₘS₂ₙ system (provided that m and n are positive numbers, and Z is any of Ge, Zn, and Ga), Li₂S-GeS₂ system, Li₂S-SiS₂-Li₃PO₄ system, Li₂S-SiS₂-LiₓMO_{y} system (provided that x and y are positive numbers, and M is any of P, Si, Ge, B, Al, Ga, and In), and Li₁₀GeP₂S₁₂ system.

When the positive active material layer 5 contains a solid electrolyte, the content of the solid electrolyte is preferably 1% by mass or more and 50% by mass or less, and more preferably 1% by mass or more and 45 mass% or less. The content of the solid electrolyte falls within the range mentioned above, thereby allowing the electric capacity of the all-solid-state battery 10 to be further increased.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used alone, or two or more thereof may be used in mixture. In addition, these materials may be used in combination. For example, a composite material of carbon black and CNT may be used. Among these materials, carbon black is preferable from the viewpoint of electron conductivity and coatability, and in particular, acetylene black is preferable.

The content of the conductive agent in the positive active material layer 5 is preferably 1% by mass or more and 10% by mass or less, more preferably 3% by mass or more and 9% by mass or less. By setting the content of the conductive agent in the above range, the energy density of the all-solid-state battery 10 can be enhanced.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer 5 is preferably 1% by mass or more and 10% by mass or less, more preferably 3% by mass or more and 9% by mass or less. By setting the content of the binder in the above range, the active material can be stably held.

Examples of the thickener include polysaccharide polymers such as carboxymethylcellulose (CMC) and methylcellulose. In a case where the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer 5 may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the solid electrolyte, the conductive agent, the binder, the thickener, and the filler.

### [Negative electrode]

The negative electrode 2 has the negative substrate 7 and the negative active material layer 6 disposed directly on the negative substrate or over the negative substrate 7 with the intermediate layer interposed therebetween. The configuration of the intermediate layer is not particularly limited, and can be selected from, for example, the configurations exemplified for the positive electrode 1.

### (Negative substrate)

The negative substrate 7 has conductivity. As the material of the negative substrate 7, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate 7 include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate 7 is preferably 2 µηι or more and 35 µm or less, more preferably 3 µm or more and 30 µm or less, still more preferably 4 µηι or more and 25 µm or less, and particularly preferably 5 µm or more and 20 µm or less. By setting the average thickness of the negative substrate 7 to the above range, it is possible to increase the energy density per volume of the all-solid-state battery 10 while increasing the strength of the negative substrate 7.

### (Negative active material layer)

The negative active material layer 6 includes a negative active material. The negative active material layer 6 may include a negative composite containing a negative active material, and contains optional components such as a conductive agent, a binder, a thickener, and a filler as necessary. The optional components such as a conductive agent, a binder, a thickener, and a filler can be selected from the materials exemplified for the positive electrode 1. When the negative active material layer 6 includes a negative composite, the negative active material layer 6 usually further contains a solid electrolyte.

As the negative active material in the all-solid-state electrochemical device, a negative active material containing a lithium element such as metallic lithium or a lithium compound is suitably used. Among them, metal lithium is preferable as the negative active material. Metallic lithium may be pure metallic lithium composed essentially of lithium element, or a lithium alloy containing other metal elements. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain multiple metal elements other than lithium element. Examples of the lithium compound include Li₄Ti₅O₁₂ and LiTiO₂.

The content of the negative active material including a lithium element in the negative active material layer 6 is preferably 80% by mass or more, more preferably 90% by mass or more, and still more preferably 99% by mass or more.

The negative active material layer 6 may be a non-porous layer (solid layer) containing a lithium element. The negative active material layer 6 may be a porous layer including particles containing metal lithium. The negative active material layer 6 may be a layer substantially including only a negative active material containing a lithium element. The negative active material layer 6 may be a pure-metallic lithium foil or a lithium alloy foil. When the negative active material layer 6 contains a negative active material containing a lithium element, the average thickness of the negative active material layer 6 is preferably 5 µm or more and 1,000 µm or less, more preferably 10 µm or more and 500 µm or less, and still more preferably 30 µm or more and 300 µm or less. The "average thickness" of the negative active material layer refers to the average value of thicknesses measured at arbitrary five points of the negative active material layer.

The negative active material layer 6 may further contain a negative active material other than the negative active material containing a lithium element. However, the content of the negative active material containing a lithium element with respect to all the negative active materials contained in the negative active material layer 6 is preferably 90% by mass or more, more preferably 99% by mass or more, and still more preferably 100% by mass.

The negative active material other than the negative active material containing the lithium element can be appropriately selected from known negative active materials. Examples of such a negative active material include metals or metalloids such as Si and Sn; metal oxides or metalloid oxides such as oxides of Si, oxides of Ti, and oxides of Sn; titanium-containing oxides such as TiNb₂O₇; polyphosphoric acid compounds; silicon carbides; and carbon materials such as graphite and non-graphitic carbon (easily graphitizable carbon or hardly graphitizable carbon). In the negative active material layer 6, one of these materials may be used singly, or two or more of these materials may be mixed and used. These materials may be used in combination with the negative active material containing the lithium element.

When the negative active material layer 6 includes a negative composite, the negative active material layer 6 usually contains a solid electrolyte. As the solid electrolyte, the same solid electrolytes as those listed above for the positive electrode can be used, and among them, it is preferable to use a sulfide solid electrolyte. When the negative active material layer 6 contains a solid electrolyte, the content of the solid electrolyte is preferably 1% by mass or more and 50% by mass or less, and more preferably 1% by mass or more and 45 mass% or less. The content of the solid electrolyte falls within the range mentioned above, thereby allowing the electric capacity of the all-solid-state battery 10 to be further increased.

When the negative active material layer 6 includes the negative composite, the content of the negative active material in the negative active material layer 6 is preferably 60% by mass or more and 99% by mass or less, and more preferably 90% by mass or more and 98% by mass or less. The content of the negative active material falls within the range mentioned above, thereby allowing a balance to be achieved between the increased energy density and productivity of the negative active material layer 6.

When the negative active material layer 6 includes the negative composite, the average thickness of the negative active material layer 6 is preferably 30 µηι or more and 1,000 µm or less, and more preferably 60 µηι or more and 500 µm or less. By setting the average thickness of the negative active material layer 6 to be equal to or more than the lower limit mentioned above, the all-solid-state battery 10 with a high energy density can be obtained. The average thickness of the negative active material layer 6 is set to be equal to or less than the upper limit mentioned above, thereby allowing, for example, the size of the all-solid-state battery 10 to be reduced.

The negative active material layer 6 mentioned above may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the solid electrolyte, the conductive agent, the binder, the thickener, and the filler.

### [Isolation layer]

The isolation layer 3 contains a solid electrolyte. As the solid electrolyte contained in the isolation layer 3, various solid electrolytes exemplified in the positive electrode 1 can be used, and among them, it is preferable to use a sulfide solid electrolyte. The content of the solid electrolyte in the isolation layer 3 is preferably 70% by mass or more, more preferably 90 by mass or more%, still more preferably 99% by mass or more, and even more preferably substantially 100% by mass in some cases.

The isolation layer 3 may contain optional components such as a binder, a thickener, and a filler. The optional components such as a binder, a thickener, and a filler can be selected from the materials exemplified for the positive electrode 1.

The average thickness of the isolation layer 3 is preferably 1 µηι or more and 50 µm or less, more preferably 3 µηι or more and 20 µm or less. When the average thickness of the isolation layer 3 is equal to or greater than the lower limit, the positive electrode 1 and the negative electrode 2 can be insulated with high reliability. The average thickness of the isolation layer 3 is equal to or less than the upper limit mentioned above, thereby allowing the energy density of the all-solid-state battery 10 to be increased.

The all-solid-state battery 10 of the present embodiment can be mounted as an energy storage apparatus configured by assembling a plurality of the all-solid-state batteries 10 on a power source for motor vehicles such as electric vehicles (EV), hybrid vehicles (HEV), and plug-in hybrid vehicles (PHEV), a power source for electronic devices such as personal computers and communication terminals, a power source for power storage, or the like. In this case, the technique of the present invention may be applied to at least one all-solid-state battery 10 included in the energy storage apparatus.

Fig. 2 illustrates an example of an energy storage apparatus 30 obtained by further assembling energy storage units 20 that each have two or more electrically connected all-solid-state batteries 10 assembled. The energy storage apparatus 30 may include a busbar (not illustrated) that electrically connects two or more all-solid-state batteries 10, a busbar (not illustrated) that electrically connects two or more energy storage units 20, and the like. The energy storage unit 20 or the energy storage apparatus 30 may include a state monitor (not illustrated) that monitors the state of one or more all-solid-state batteries 10.

### [Method of manufacturing all-solid-state electrochemical device]

The method of manufacturing all-solid-state electrochemical device according to an embodiment of the present invention can be performed by a generally known method except that the sulfur-carbon composite is used for producing the positive electrode. Specifically, the manufacturing method includes, for example, (1) preparing a sulfur-carbon composite, (2) providing a positive electrode, (3) providing a material for an isolation layer, (4) providing a negative electrode, and (5) stacking the positive electrode, the isolation layer, and the negative electrode. Hereinafter, each of the steps will be described in detail.

### (1) Sulfur-carbon composite preparation step

In this step, a sulfur-carbon composite is prepared by combining a mixture obtained by mixing sulfur with porous carbon. The combining is performed by heat-treating the mixture in a sealed case. Examples of the heat treatment include a method of performing a first heating step and a second heating step described later, and a method of slowly raising the temperature without dividing the heat treatment into the first heating step and the second heating step.

As an example of the heat treatment for performing the first heating step and the second heating step, specifically, the following steps are performed. By performing the first heating step and the second heating step, the sulfur particles are carried in a highly dispersed manner not only on the surface of the porous carbon but also in the pores, so that the utilization factor of sulfur can be increased.

### (1-1) First heating step

In the first heating step, heating is performed at a temperature at which sulfur is melted. Specifically, the temperature of the mixture is raised from room temperature to a range of 112°C or higher and 159°C or lower, and then held at a temperature within the range. The retention time is preferably 5 hours or more. In this step, sulfur is uniformly coated on the surface of the porous carbon.

### (1-2) Second heating step

In the second heating step, heating is performed at a temperature at which sulfur is vaporized. In the second heating step, it is preferable to raise the temperature to 250°C or higher and hold the temperature. In the second heating step, sulfur uniformly carried on the surface of the porous carbon in the first heating step can be vaporized in the vicinity of the pores of the porous carbon.

A rate of temperature increase in the first heating step and the second heating step is not particularly limited, and is preferably 1°C/min or more and 5°C/min or less in view of work efficiency. In addition, a step of cooling to 95°C or lower may be included between the first heating step and the second heating step in order to promote immobilization of sulfur coated on the surface of the porous carbon.

### (2) Step of providing positive electrode

In this step, usually, a positive composite for forming a positive active material layer using the sulfur-carbon composite as the positive active material is prepared. The method for preparing the positive composite is not particularly limited, and can be appropriately selected in accordance with the purpose. Examples thereof include a treatment of a material of the positive composite by a mechanical milling method, and compression molding of the positive active material. When the positive composite contains the positive active material and the solid electrolyte, this step can include mixing the positive active material and the solid electrolyte by using, for example, a mechanical milling method or the like to prepare the mixture or composite of the positive active material and the solid electrolyte.

Providing the positive electrode containing the positive active material may be preparing the positive electrode containing the positive active material. The positive electrode can be fabricated, for example, by applying a positive composite paste to a positive substrate directly or with an intermediate layer interposed therebetween, and drying the paste. The positive composite paste contains the sulfur-carbon composite and the respective components constituting the positive composite such as a conductive agent and a binder, which are optional components. The positive composite paste may further contain a dispersion medium. Specific examples and suitable examples of the positive electrode to be provided are the same as those of the positive electrode included in the all-solid-state battery according to an embodiment of the present invention described above. The positive electrode can also be prepared by forming by pressure-molding the positive composite on the positive substrate directly or with an intermediate layer interposed therebetween.

### (3) Step of providing material for isolation layer

In this step, a material for forming the isolation layer is usually prepared. The main component of the material for the isolation layer in the all-solid-state battery is usually a solid electrolyte. The solid electrolyte as the material for isolation layer can be prepared by a conventionally known method. For example, predetermined materials can be subjected to a treatment by a mechanical milling method to obtain the solid electrolyte. The material for isolation layer may be prepared by heating predetermined materials to the melting temperature or higher by a melt quenching method to melt and mix the both materials at a predetermined ratio, and quenching the melted mixture. Examples of other methods for synthesizing the material for isolation layer include a solid phase method of sealing under reduced pressure and then firing, a liquid phase method such as dissolution-precipitation, a gas phase method (PLD), and firing under an argon atmosphere after mechanical milling.

### (4) Step of providing negative electrode

In the present step, normally, a negative composite for forming a negative active material layer is produced. The specific method for preparing the negative composite is the same as that for the positive composite. When the negative composite contains the negative active material and the solid electrolyte, this step can include mixing the negative active material and the solid electrolyte by using, for example, a mechanical milling method or the like to prepare the mixture or composite of the negative active material and the solid electrolyte.

Providing the negative electrode containing the negative active material may be preparing the negative electrode containing the negative active material. The negative electrode can be prepared similarly to the production of the positive electrode. When the negative active material is a metal such as metal lithium, the negative electrode can be produced, for example, by stacking a foil-shaped negative active material on the negative substrate directly or with an intermediate layer interposed therebetween.

### (5) Stacking step

In the present step, for example, a positive electrode including a positive substrate and a positive active material layer, an isolation layer, and a negative electrode including a negative substrate and a negative active material layer are stacked. In this step, the positive electrode, the isolation layer and the negative electrode may be sequentially formed in this order, or vice versa, and the order of formation of each layer is not particularly limited. The positive electrode is formed, for example, by pressure-molding a positive substrate and a positive composite, the isolation layer is formed by pressure-molding the material for the isolation layer, and the negative electrode is formed by pressure-molding a negative substrate and a negative composite. The positive electrode, the isolation layer, and the negative electrode may be stacked by pressure-molding the positive substrate, the positive composite, the material for the isolation layer, the negative composite, and the negative substrate at a time. The positive electrode and the negative electrode may be each formed in advance, and stacked by pressure-molding with the isolation layer.

### [Other embodiments]

The present invention is not limited to the above embodiments, and can be carried out in various aspects with alterations and/or improvements being made in addition to the above aspects. For example, the all-solid-state battery may include layers other than the positive electrode, the isolation layer, and the negative electrode, such as an intermediate layer and an adhesive layer. The all-solid-state electrochemical device according to the present invention may be a bipolar all-solid-state battery. The all-solid-state electrochemical device according to the present invention may be a capacitor or the like or a primary battery in addition to an all-solid-state battery which is an energy storage device.

### EXAMPLES

Hereinafter, the present invention will be described in more detail with reference to Examples, but the present invention is not limited to the following Examples.

### (Preparation of solid electrolyte)

Li₂S (0.478 g) and P₂S₅ (0.772 g) were mixed in an agate mortar. The mixture was charged into a closed 80 mL zirconia pot containing 160 g of zirconia balls with a diameter of 4 mm. These steps were performed under an argon atmosphere having a dew point of -50°C or lower. Next, a mechanical milling treatment was performed at a revolution speed of 510 rpm for 45 hours by a planetary ball mill (manufactured by FRITSCH, model number: Premium line P-7) to obtain 75Li₂S·25P₂S₅ (LPS) as a sulfide solid electrolyte.

### [Example 1]

### (Preparation of positive composite)

Sulfur and porous carbon having a specific surface area of 2100 m²/g were mixed at a mass ratio of 65: 35. The average pore size and average particle size of the porous carbon are shown in Table 1. The mixture was placed in a sealed electric furnace. After an argon flow for 1 hour, the temperature was increased to 150°C at a rate of temperature increase of 5°C/min, and held for 2 hours, then, the mixture was allowed to cool to 80°C, which is a temperature at which sulfur is solidified, thereafter, the temperature was increased again to 300°C at a rate of temperature increase of 5°C/min, and held for 2 hours, and the mixture was allowed to cool to room temperature to prepare a sulfur-carbon composite. Thereafter, the sulfur-carbon composite and the sulfide solid electrolyte were mixed at a mass ratio of 60: 40. Next, under an argon atmosphere, the mixture was charged into an 80 mL sealed zirconia pot containing 160 g of zirconia balls having a diameter of 4 mm, and combined by a mechanical milling treatment with a planetary ball mill at a revolution speed of 300 rpm for 15 minutes, thereby obtaining a positive composite.

### (Production of all-solid-state battery)

Eighty mg of a sulfide solid electrolyte as the material for an isolation layer was charged into a powder molding machine having an inner diameter of 10 mm, and then pressure-molded using a hydraulic press to prepare an isolation layer. After the pressure release, 5 mg of the positive composite was charged onto one surface of the isolation layer, and pressure molding was performed at 360 MPa for 5 minutes to prepare a positive active material layer. After the pressure release, a negative electrode in which a metal lithium foil as the negative active material layer and an indium foil were bonded together in advance faced the opposite surface of the isolation layer, and pressure molding was performed at 45 MPa. As a result, a layered product having a diameter of 10 mm and including the positive active material layer, the isolation layer, and the negative active material layer was obtained. A polytetrafluoroethylene plate having a rectangular shape of about 30 mm square provided with a through hole having a diameter of about 10 mm in a central portion was provided, the obtained layered product was disposed in the through hole, and the plate was sandwiched between two stainless steel foils so as to cover the central portion of the polytetrafluoroethylene plate. This was vacuum-sealed in an outer case made of a metal resin composite film. At this time, each end of a lead terminal including nickel foil previously attached to each stainless steel foil was led out from a sealed portion of the outer case. Both surfaces of the outer case were sandwiched between two polytetrafluoroethylene sheets of about 40 mm square, the both surfaces were sandwiched between two stainless steel plates of about 60 mm square, and the stainless steel plates were fastened to each other with a screw under the condition that a pressure of 50 MPa was applied to the layered product. In this manner, an all-solid-state battery according to Example 1 was obtained.

### [Examples 2 to 5 and Comparative Examples 1 to 4]

All-solid-state batteries of Examples 2 to 5 and Comparative Examples 1 to 4 were obtained similarly to Example 1 except that the average pore size and the average particle size of porous carbon in the sulfur-carbon composite as the positive active material were as shown in Table 1.

### [Reference Example 1]

### (Fabrication of positive electrode)

As the positive active material, a sulfur-carbon composite containing porous carbon having the average pore size and the average particle size shown in Table 1 was used. Next, a positive electrode paste containing the positive active material, acetylene black (AB) as a conductive agent, carboxymethyl cellulose (CMC) as a thickener, and styrene-butadiene rubber (SBR) as a binder at a mass ratio of 80: 10: 3.6: 6.4 was prepared using water as a dispersion medium. The positive electrode paste was applied to one surface of an aluminum foil as a positive substrate, and dried, and the resultant was pressed and to fabricate a positive electrode in which the positive active material layer was disposed.

### (Fabrication of negative electrode)

A lithium metal plate of 30 mm in thickness, 40 mm in length, and 500 µm in thickness was used as the negative electrode.

### (Preparation of nonaqueous electrolyte solution)

A solution in which lithium bis (trifluoromethanesulfonyl) imide as an electrolyte salt was dissolved at a concentration of 1 mol/dm³ in a mixed solvent of fluoroethylene carbonate and methyl-2, 2, 2-trifluoroethyl carbonate mixed at a volume ratio of 50: 50 was prepared as a nonaqueous electrolyte solution.

### (Fabrication of nonaqueous electrolyte solution battery)

With the use of a polypropylene microporous membrane of 25 µm in thickness, a bag-shaped separator with two bag parts was prepared. The negative electrode was inserted into one of the bag parts of the bag-shaped separator, and the positive electrode was inserted into the other bag part such that the surface with the positive active material layer disposed thereon faced the negative electrode. In this manner, an electrode assembly was prepared.

The electrode assembly was housed in the metal resin composite film as an outer case so that the open ends of the lead terminals, each of which was connected to the positive electrode or the negative electrode in advance, were exposed to the outside, the metal resin composite film was sealed except for the space to be the electrolyte solution filling hole, the nonaqueous electrolyte solution was injected, and then the electrolyte solution filling hole was hermetically sealed. A nonaqueous electrolyte solution battery was thus fabricated.

### [Reference Example 2]

A nonaqueous electrolyte solution battery of Reference Example 2 was obtained similarly to Reference Example 1 except that a sulfur-carbon composite containing porous carbon having the average pore size and the average particle size shown in Table 1 was used as the positive active material.

### [Evaluation]

### (Charge-discharge test)

A charge-discharge test was performed under an environment of 25°C. In the charge-discharge test, two cycles of initial charge-discharge starting from discharge were performed under the following conditions. Discharge in Examples 1 to 5 and Comparative Examples 1 to 4 was constant current (CC) discharge at a discharge current of 0.4 mA/cm² and an end-of-discharge voltage of 0.7 V, and charge was constant current (CC) charge at a charge current of 0.4 mA/cm² and an end-of-charge voltage of 2.4 V Discharge in Reference Examples 1 and 2 was constant current (CC) discharge at a discharge current of 0.4 mA/cm² and an end-of-discharge voltage of 1.0 V, and charge was constant current (CC) charge at a charge current of 0.4 mA/cm² and an end-of-charge voltage of 3.0 V A pause time between these discharge-charge steps was set to 10 minutes.

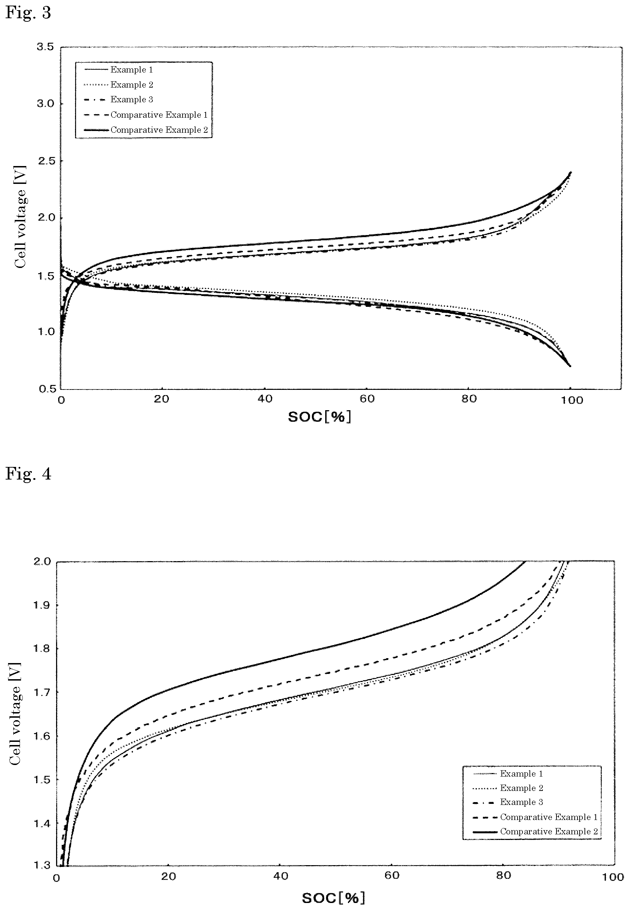

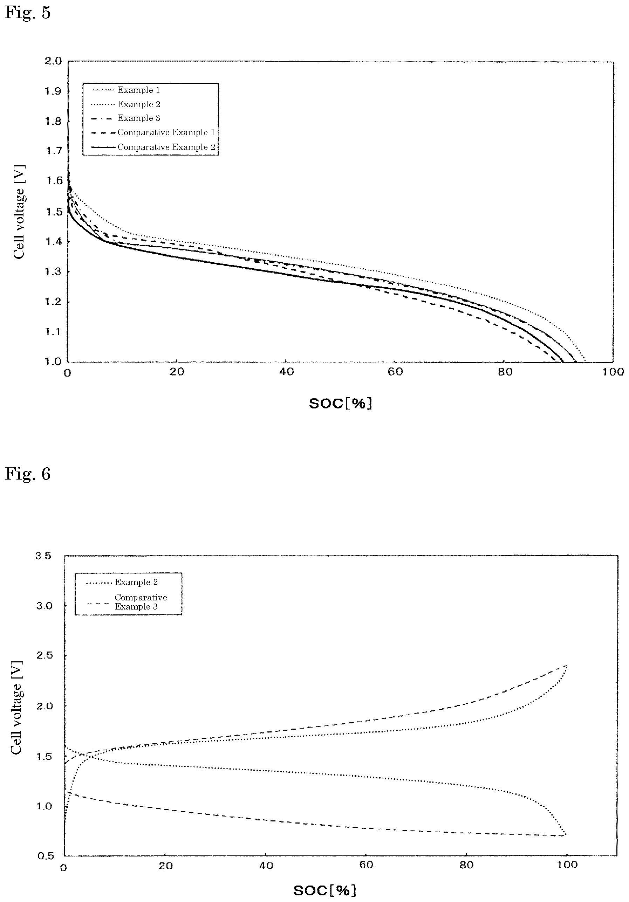

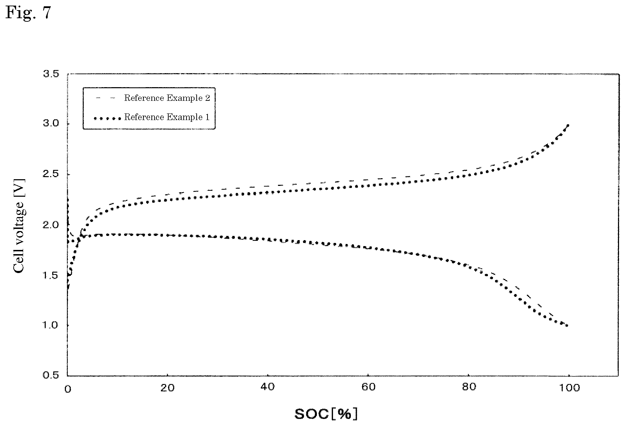

Fig. 3 illustrates second charge-discharge curves in Examples 1 to 3 and Comparative Examples 1 and 2, Fig. 4 illustrates second charge curves of these Examples and Comparative Examples, and Fig. 5 illustrates second discharge curves of these Examples and Comparative Examples. In addition, Fig. 6 illustrates the second charge-discharge curves in Example 2 and Comparative Example 3, and Fig. 7 illustrates the second charge-discharge curves in Reference Examples 1 and 2. Table 1 shows a voltage difference (operating voltage difference) between a cell voltage at 50% depth of discharge (DOD) during the second discharge and a cell voltage at 50% state of charge (SOC) during the second charge.

**[Table 1]**

| | Form of battery | Positive active material | | Operating voltage difference [V] |
|---|---|---|---|---|
| | | Average pore size of carbon [nm] | Average particle size of carbon [µm] | |
| Example 1 | All-solid-state battery | 1.9 | 5.0 | 0.400 |
| Example 2 | All-solid-state battery | 2.2 | 5.6 | 0.403 |
| Example 3 | All-solid-state battery | 2.4 | 5.1 | 0.399 |
| Example 4 | All-solid-state battery | 2.2 | 15.0 | 0.401 |
| Example 5 | All-solid-state battery | 1.0 | 6.0 | 0.360 |
| Comparative Example 1 | All-solid-state battery | 4.6 | 7.0 | 0.477 |
| Comparative Example 2 | All-solid-state battery | 38.0 | 9.0 | 0,554 |
| Comparative Example 3 | All-solid-state battery | 2.2 | 92.0 | 0,986 |
| Comparative Example 4 | All-solid-state battery | 4.6 | 50.0 | 0.529 |
| Reference Example 1 | Nonaqueous electrolyte solution battery | 2.2 | 5.6 | 0.535 |
| Reference Example 2 | Nonaqueous electrolyte solution battery | 2.2 | 92.0 | 0.613 |

As shown in Table 1 and Figs. 3 to 6, in Examples 1 to 5 in which the positive active material layer contained a sulfur-carbon composite, the average pore size of the carbon was 3.0 nm or less, and the average particle size was 30.0 µm or less, the cell voltage in the charge curve was lower, the cell voltage in the discharge curve was higher, and the operating voltage difference was smaller than those in Comparative Examples 1 to 4 in which the average pore size of the carbon was more than 3.0 nm or the average particle size of the carbon was more than 30.0 µm. From this, it is found that when the positive active material layer of the all-solid-state battery contains the sulfur-carbon composite in which the average pore size of carbon is 3.0 nm or less and the average particle size of carbon is 30.0 µm or less, polarization is reduced. In addition, as illustrated in Fig. 7, in the nonaqueous electrolyte solution battery, as compared with the charge-discharge curve of the all-solid-state battery illustrated in Fig. 6, the difference in cell voltage in the charge-discharge curve between Reference Example 1 in which the average particle size of carbon in the sulfur-carbon composite contained in the positive active material layer was 30.0 µm or less and Reference Example 2 in which the average particle size of carbon was more than 30.0 µm was very small. As shown in Table 1, comparison between Example 2 in which the average particle size of carbon in the sulfur-carbon composite contained in the positive active material layer was 30.0 µm or less and Reference Example 1 showed that Example 2, which was the all-solid-state battery, had a smaller difference in operating voltage than Reference Example 1, which was the nonaqueous electrolyte solution battery. Therefore, it is considered that the sulfur-carbon composite can more sufficiently exhibit the effect of reducing polarization in the form of the positive active material of the all-solid-state battery.

From the above results, it was shown that the all-solid-state electrochemical device had an excellent polarization reduction effect.

### DESCRIPTION OF REFERENCE SIGNS

1: positive electrode
2: negative electrode
3: isolation layer
4: positive substrate
5: positive active material layer
6: negative active material layer
7: negative substrate
10: All-solid-state electrochemical device (all-solid-state battery)
20: energy storage unit
30: energy storage apparatus

## Claims

1. An all-solid-state electrochemical device comprising: a positive active material layer; an isolation layer; and a negative active material layer, wherein
the positive active material layer includes a sulfur-carbon composite,
the sulfur-carbon composite contains sulfur and porous carbon, and
the carbon has an average pore size of 0.5 nm or more and 3.0 nm or less and an average particle size of 0.1 µηι or more and 30.0 µm or less.

2. The all-solid-state electrochemical device according to claim 1, wherein the positive active material layer contains a sulfide solid electrolyte.

3. A sulfur-carbon composite comprising sulfur and porous carbon, wherein
the carbon has an average pore size of 0.5 nm or more and 3.0 nm or less and an average particle size of 0.1 µm or more and 30.0 µm or less.
